(19) Europäisches Patentamt
European Patent Office
Office européen des brevets

(11) EP 0 632 209 B1

(12) EUROPEAN PATENT SPECIFICATION

(45) Date of publication and mention
of the grant of the patent:
**02.12.1998  Bulletin 1998/49**

(51) Int Cl.⁶: **F16C 39/06**

(21) Application number: **94110029.9**

(22) Date of filing: **28.06.1994**

(54) **Magnetic bearing**

Magnetlager

Palier magnétique

(84) Designated Contracting States:
**CH DE FR LI**

(43) Date of publication of application:
**04.01.1995  Bulletin 1995/01**

(73) Proprietor: **SEIKO SEIKI KABUSHIKI KAISHA
Narashino-shi Chiba (JP)**

(72) Inventor: **Mizuno, Takeshi
Inagi-shi, Tokyo (JP)**

(74) Representative: **Fleuchaus, Leo, Dipl.-Ing. et al
Melchiorstrasse 42
81479 München (DE)**

(56) References cited:
**EP-A- 0 549 912          WO-A-93/23683
DE-A- 3 937 687**

## Description

-- Background of the Invention --

(Field of the Invention)

This invention relates to a magnetic bearing of which a rotor is floating through the control of magnetic force of an electromagnet in that the levitating position of it can be at a constant position through the detection and control of the levitating position thereof.

(Description of the Related Art)

Recently a magnetic levitation system with no contact is used as a conveyor system which is utilized in clean environments, such as IC manufacturing equipment. This kind of magnetic levitation apparatus, uses a magnetic bearing wherein its rotor is a floating body which is levitating due to the magnetic force of an electromagnet, and by way of detecting of the levitating position of the rotor, it is controlled to keep its constant position.

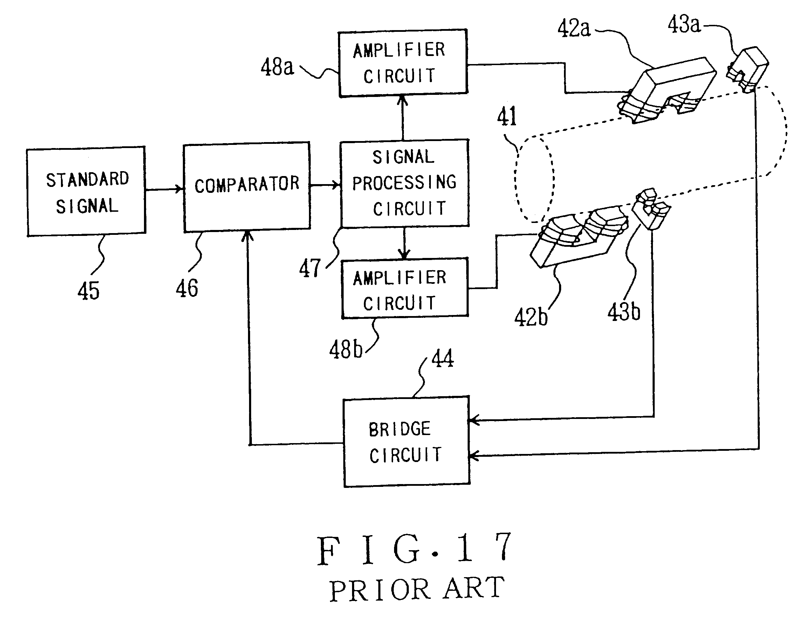

Fig. 17 shows a block diagram of the configuration of a magnetic bearing in the prior art. This magnetic bearing has two electromagnets 42a, 42b and two position sensors 43a, 43b which are facing each other through the rotor 41, and has a bridge circuit 44 into which the detecting signal of the position sensor 43a, 43b is input, a comparator 46 which compares the output signal from the bridge circuit 44 with the standard signal 45, a signal processing circuit 47 which treats signals, for example, to adjust the phase of the output signal from the comparator 46, etc., and an amplifier circuits 48a, 48b which amplify the output signal from the signal processing circuit 47 and then send the product thereof to the electromagnets 42a, 42b.

In this magnetic bearing, the rotor 41 is kept in a floating position due to the magnetic force of the electromagnets 42a, 42b. The position of the rotor 41 is detected by the position sensors 43a, 43b, and by way of the bridge circuit 44, the signal which is corresponding to the rotor's position 41 is output to the comparator 46 which compares the output signal from the bridge circuit 44 with the standard signal 45 and obtains a signal which is corresponding to the deviation from the standard position. This signal is sent to the amplifier circuits 48a, 48b after the signal is processed by the signal processing circuit 47. The amplifier circuits 48a, 48b supply the exciting current to the electromagnets 42a, 42b. Like this above, the rotor 41 is controlled to keep a predetermined constant position.

Although the magnetic bearing detects the rotor's position with the usage of the position sensor, it is technologically difficult to detect precisely its position with the position sensor and an expensive high precision sensor is necessary for the purpose of controlling the rotor's position precisely. Usually in prior art, the integral element is inserted into the feedback loop in order to keep the precise position. But these integral elements are more or less approximate ones, depending on the method, though. For example, in case that the integral element is constituted with an analogue circuit, the direct current gain for the offsetting in the OP amplifier can not be infinite, or in case of a digital controlling apparatus in use, deviation is left due to the error in quantization inside the A/D transformation or inside the processor.

As shown above, there exists a limitation in the improvement in having the rotor of the magnetic levitation keeping its precise position by way of putting the integral element in use.

The present invention tries to overcome the setbacks of the prior art referred to in the introductory portion of the description in connection with the discussion of Fig. 17.

It is to be noted, that a magnetic bearing according to the preamble of claim 1 is for example known from DE 3937687 which discloses a magnetic bearing in which the control of the magnitude of the current through the electromagnet is used to control the floating of the rotor.

Furthermore, from WO-A-93 23 683 there is known another arrangement of a magnetic bearing wherein the phase of a highfrequency signal in the electromagnets provided by an oscillator is used to control the position of a floating rotor.

However, the present invention follows a different approach and is not based on the control of the magnitude of a current applied through the electromagnets or on the control of the phase of a superimposed highfrequency signal.

The object of this invention is to offer a magnetic bearing which can control a rotor's position in higher precision with a simple configuration compared with those in prior art. In order to attain the object above, the magnetic bearing in this invention is characterized by such a configuration according to claim 1.

The magnetic bearing in claim 3 in this invention is further characterized in that the hysteresis amplifier supplies exciting current to the electromagnet by way of giving one of two levels of voltage to the electromagnet through the switching, and that said position control means for controlling the rotor's position uses a phase-locked-loop for controlling the switching frequency in the hysteresis amplifier by way of controlling the exciting current which is supplied by the hysteresis amplifier in accordance with the switching phase in the hysteresis amplifier.

The magnetic bearing in claim 4 in this invention is further characterized in that said hysteresis amplifier supplies exciting current to the electromagnet by supplying one of two levels of voltage through a switching, and that said position control means which controls the rotor's position jointly uses both a phase-locked-loop and a frequency-voltage servo system, both are specified as below.

Such a phase-locked-loop controls the switching frequency of the hysteresis amplifier by controlling the exciting current which is supplied by the hysteresis amplifier, corresponding to the switching phase of the hysteresis amplifier, and such a frequency-voltage servo system controls the switching frequency of the hysteresis amplifier by controlling the exciting current which is supplied by the hysteresis amplifier based on the electric voltage which is obtained in accordance with the switching frequency of the hysteresis amplifier.

In the invention according to claims 1 to 3, such an hysteresis amplifier is used as the amplifier which excites the electromagnet, that the switching frequency changes in accordance with inductance. In the hysteresis amplifier, the inductance and accordingly the switching frequency, too, changes in accordance with the degree of change of the gap between the electromagnet and the rotor. In this invention, the hysteresis amplifier as above is applied to detect the rotor's position without the usage of the position sensor and based on the rotor's position, the rotor is kept at a constant position, by way that the switching frequency is controlled to be constant, with the phase-locked-loop.

In the invention according to claim 4, the hysteresis amplifier is applied, which has such a character that the switching frequency changes according to the change in the inductance as in the claim 3, then the rotor's position is detected without the position sensor, by utilizing the characteristics that the switching frequency of the hysteresis amplifier changes in accordance with the change in the position between the electromagnet and rotor. In addition to this, not only the rotor is kept at a constant position by way that the switching frequency is controlled to be constant using the phase-locked-loop based on the rotor's position detected, but also malsynchronization of the phase-locked-loop is prevented by way of the frequency-voltage feedback control through the electric voltage in accordance with the switching frequency.

Due to this invention such a magnetic bearing is realized that the rotor's position is controlled in highly precision without the position sensor.

-- Brief Description of the Drawings --

Fig. 1 shows a block diagram of the constitution of an embodiment of the magnetic bearing in this invention;
Fig. 2 shows an explanatory drawing of the rotor and the electromagnet in Fig. 1;
Fig. 3 shows a waveform drawing concerning the relation between the current in the coil of the electromagnet and the applied voltage;
Fig. 4 shows a block diagram of the constitution of the hysteresis amplifier in Fig. 1;
Fig. 5 shows a drawing of the hysteresis comparator characteristics in Fig. 4;
Fig. 6 shows a waveform drawing concerning the current in the coil due to the hysteresis amplifier in Fig. 4;
Fig. 7 shows a circuit drawing of the equivalent circuit of the electromagnet coil in an embodiment;
Fig. 8 shows an explanatory drawing of the relation between the current and applied voltage in the circuit of Fig. 7;
Fig. 9 shows a waveform drawing of step type voltage applied to the circuit of Fig. 8;
Fig. 10 shows a characteristics drawing of change in current, when the step-type voltage is applied to the circuit of Fig. 9;
Fig. 11 shows an explanatory drawing of the electromagnet and the rotor in an embodiment;
Fig. 12 shows a block diagram of the other constitution of the hysteresis amplifier;
Fig. 13 shows a block diagram of the other embodiment of the magnetic bearing in this invention;
Fig. 14 shows a block diagram of the third embodiment in this invention;
Fig. 15 shows a block diagram of the dynamic behavior of the third embodiment in this invention;
Fig. 16 shows a simplified block diagram of the dynamic behavior of the third embodiment in this invention; and
Fig. 17 shows a block diagram of the constitution of the magnetic bearing in prior art.

-- Detailed Description of the Preferred Embodiments --

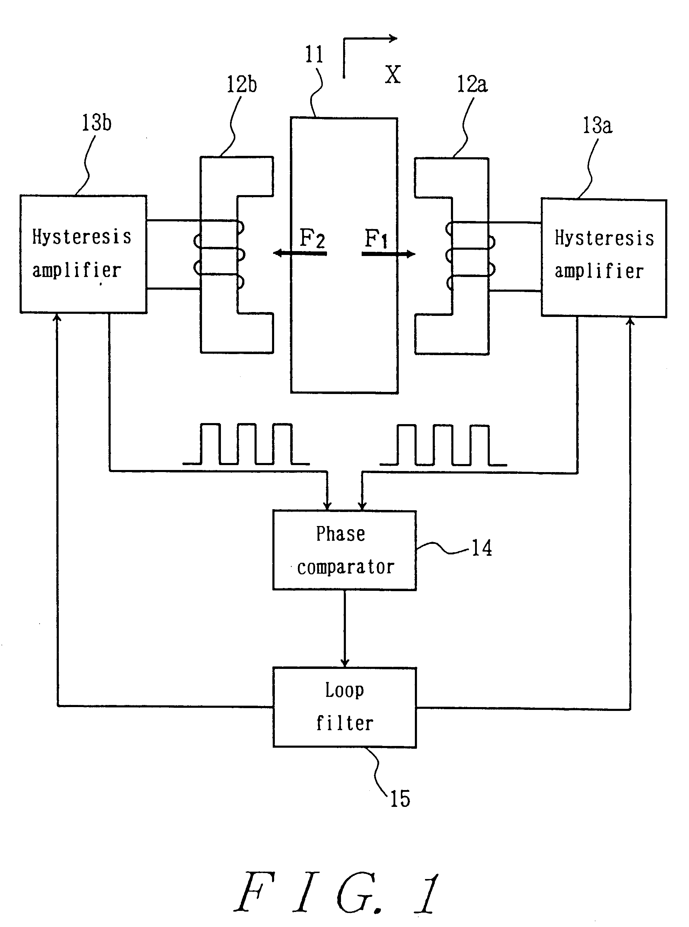

The preferred embodiment of the magnetic bearing in this invention will be explained in detail hereunder according to the Figs. 1 through 16.

Fig. 1 shows a block diagram of the constitution of an embodiment of the magnetic bearing in this invention. As shown in this drawing, the magnetic bearing in this embodiment has two electromagnets 12a, 12b which are set at a symmetrical position to the center and in-between of which the rotor 11 exists, the hysteresis amplifiers 13a, 13b which supply the exciting current to said electromagnets through the application of one of two levels of voltage by switching to the electromagnets 12a, 12b, the phase comparator 14 which detects the phase difference between both waveforms input from each hysteresis amplifier 13a, 13b, and the loop-filter 15 which supplies to each hysteresis amplifier 13a, 13b direct current which is converted from the output of the phase comparator 14.

In this type of the magnetic bearing, the exciting current is supplied to the electromagnet 12a, 12b from the hysteresis amplifier 13a, 13b and the rotor 11 is kept levitated with the magnetic force of the electromagnet 12a, 12b (attraction $F_1$, $F_2$).

And the switching waveform in the hysteresis amplifier 13a, 13b is input into the phase comparator 14, and then the phase difference between both waveforms is detected, and the output from the phase comparator 14 is converted to the direct current by the loop-filter 15 and supplied to the hysteresis amplifier 13a, 13b. Like this above, a phase-locked-loop (PLL) is formed with the hysteresis amplifier 13a, 13b, the phase comparator 14 and the loop-filter 15, therefore the rotor's position X is controlled to be kept at a constant predetermined position.

Like this above in this embodiment the hysteresis amplifier 13 (which represents 13a and 13b) which has the characteristic that the switching frequency changes according to the inductance is used as for the amplifier which excites the electromagnet 12 (which represents 12a and 12b), and utilizing the fact that the switching frequency of this hysteresis amplifier 13 changes in accordance with the position X of the rotor 11, that is, the gap between the electromagnet 12 and the rotor 11, the rotor's position is obtained from the switching frequency of the hysteresis amplifier 13. Therefore, the position sensor is not necessary.

And in this embodiment again, since the switching frequency can represent the rotor's position, the rotor is kept at a constant position, through the control in that the switching frequency of the hysteresis amplifier should be constant in accordance with the rotor's position which is obtained by the phase-locked-loop to which the switching frequency above is supplied. Therefore, the rotor's position can be controlled with high precision, since the error in controlling is detected at the phase level.

In particular, the integral element of the phase-locked-loop control in this invention is ideal since it is based on the mathematical relation that the phase is equal to the integral of the angular frequency, therefore a high precision control is possible because there exists no error in substance in the systems relation above.

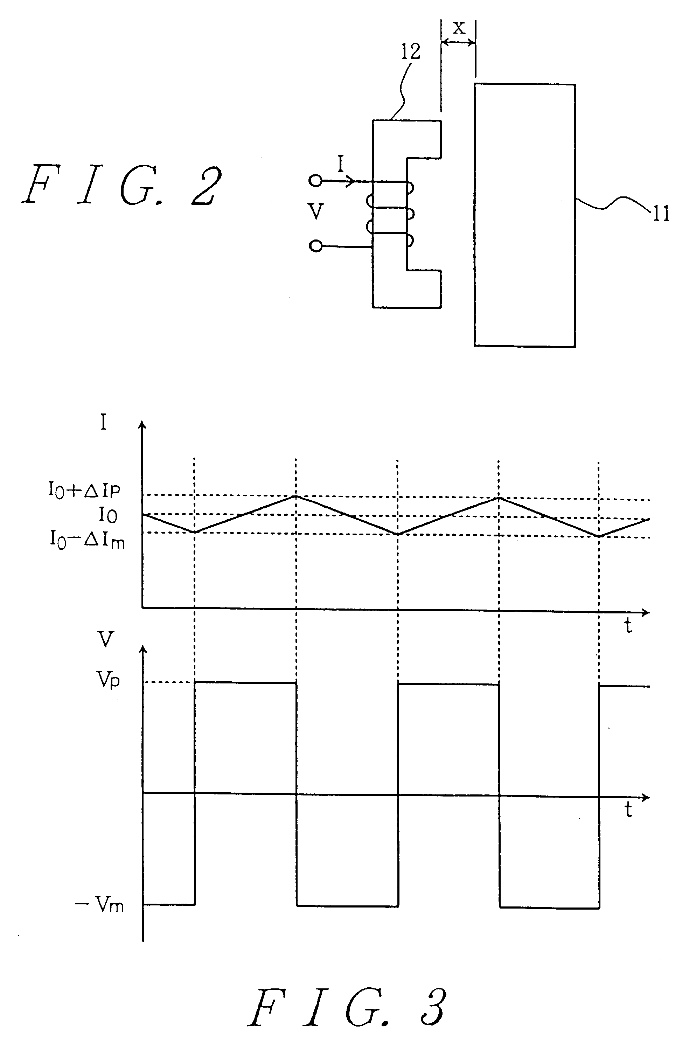

Next, the outline of the operation of the hysteresis amplifier will be explained hereunder according to Figs. 2 through 3.

As shown in Fig. 2, assume that V is the voltage applied to the electromagnetic coil, I is the current applied to the coil and X is the gap between the electromagnet 12 and the rotor 11.

Fig. 3 shows a waveform drawing concerning the relation between the current I above and the voltage V above.

As shown in the Figure above, admitting the width$\pm\Delta I$ around the target current value $I_0$, the hysteresis amplifier 13 switches off the voltage to be charged to the coil and changes V to $-V_m$, if the actual current value turns to be the upper limit ($I_0+\Delta I_p$), and it switches off the voltage above and changes V to $V_p$, if the actual current value turns to be the lower limit ($I_0-\Delta I_m$).

In this embodiment, the rotor's position 11 is detected from the switching frequency, utilizing the fact that the switching frequency of the voltage in the hysteresis amplifier 13 is approximately proportionate to the gap X between the electromagnet 12 and the rotor 11.

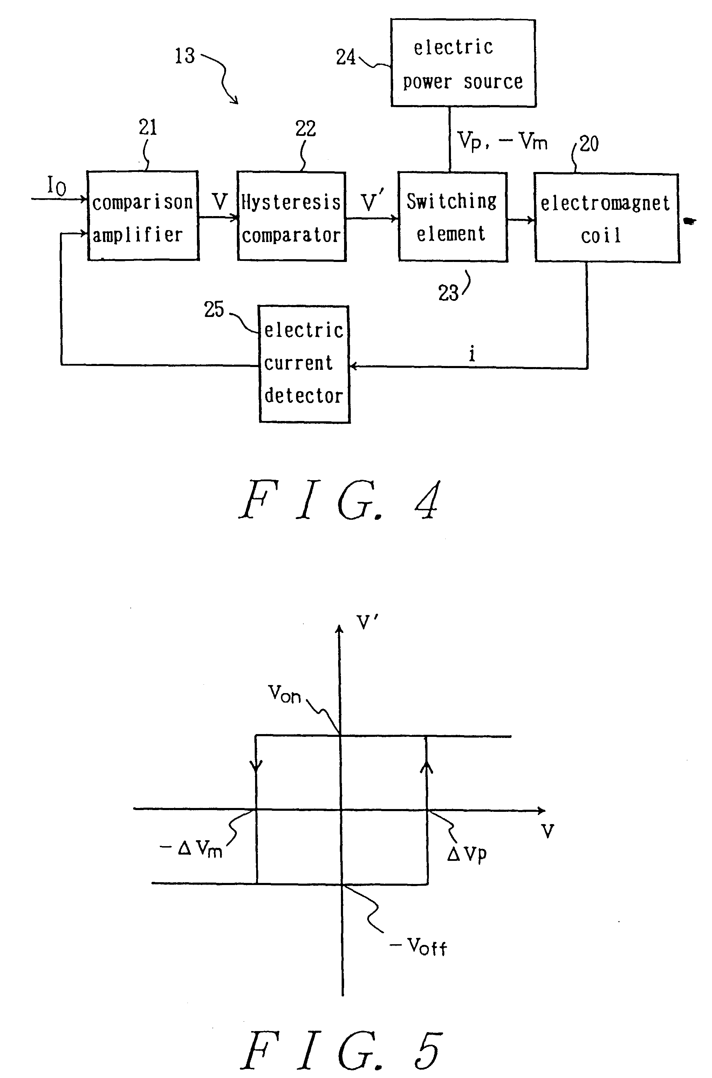

Fig. 4 shows a block diagram of the constitution of the hysteresis amplifier 13. As shown in this figure, the hysteresis amplifier 13 has the comparison amplifier 21 to which the command current $I_0$ is input and the hysteresis comparator 22 to which the output V from the comparison amplifier 21 is input. The hysteresis amplifier 13 receives the output voltage V' from the hysteresis comparator 22, has the switching element 23 which switches two levels of the voltage from the electric power source 24 and supplies it to the coil 20 of the electromagnet 12, and the electric current detector 25 which detects the current i in the coil 20 of the electromagnet 12 and supplies it to the comparison amplifier 21.

The command current $I_0$ is the current value which is expected to be applied to the coil 20 of the electromagnet 12, which is usually the summation of bias current and control current. This command current $I_0$ is supplied from the loop-filter 15 in Fig. 1.

The comparison amplifier 21 outputs the voltage V [$V=K_v \cdot (I_0-i)$: where $K_v$ is constant] which is proportionate to the difference between the command current $I_0$ and coil current i.

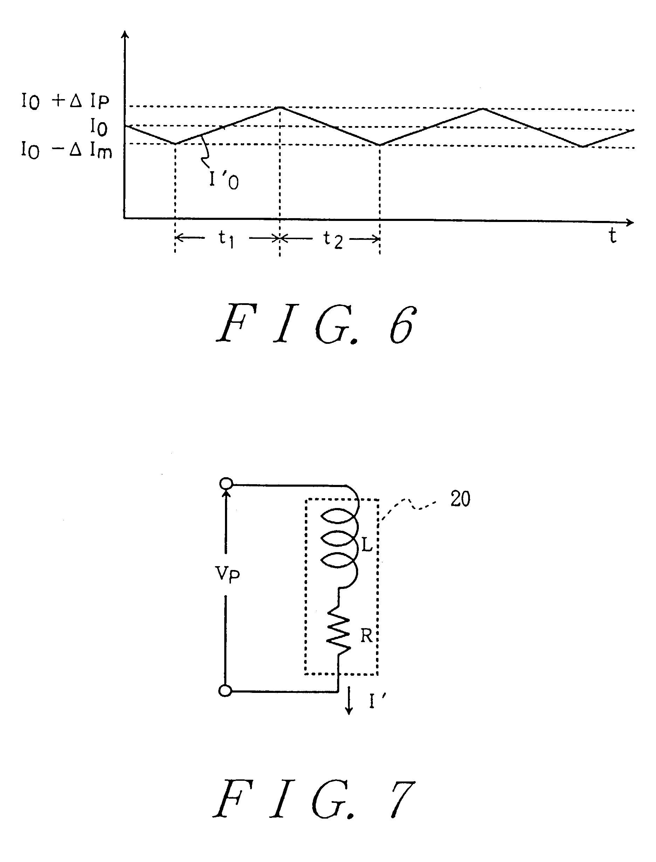

The hysteresis comparator 22 is the comparator that the threshold value changes according to the hysteresis of the input signal, and has such a characteristic, for example, as shown in Fig. 5. Suppose that $V_{on}$ is the upper side output voltage V' and that $V_{off}$ is the lower side one and again suppose that $\Delta V_p$ is the input voltage which is at the time of the change when the output voltage changes from $-V_{off}$ to $V_{on}$ and $-\Delta V_m$ is the one which the output voltage changes from $V_{on}$ to $-V_{off}$.

The switching element 23 is the element which alters the voltage applied to the coil 20 from high voltage ($V_p$) to the minus voltage ($-V_m$) or the small enough low voltage ($V_L$), for example, transistor, FET, cylinder, etc.

The waveform of the switching which is supplied to the phase comparator 14 in Fig. 1 can be the output waveform of the hysteresis comparator 22 or can be the output form of the switching element 23, or a binarized waveform of the output from the electric current detector 25.

Next, the operations of the hysteresis amplifier 13 will be explained.

As shown in Fig. 6, the current in the coil 20 varies like chopping wave at the center of the target value $I_0$. The reason why is as follows.

Suppose that I' [$(I_0-\Delta I_m)<I'<I_0$] is the coil current at a certain point, where $V_{on}$ is the output of the hysteresis com-

parator 22 and $V_p$ is the voltage applied to the coil 20.

Suppose again that the inductance L and resistor R is in series of the coil 20 and that the relation is $V_p \doteq (I_0 + \Delta I_p)/R$, and in this case, the coil current increases gradually because of the inductance L of the coil 20, and arrives at $I_0$ and simultaneously the sign of the output voltage from the comparison amplifier 21 changes (for example, positive to negative). But, because of the characteristics of the hysteresis comparator 22, the output of the hysteresis comparator 22 stays at $V_{on}$ for a moment, and therefore the current still increases over $I_0$.

And then when the output voltage value V of the comparison amplifier 21 becomes smaller than $-\Delta V_m$, the output of the hysteresis comparator 22 changes to $-V_{off}$ and the voltage applied to the coil 20 also changes from $V_p$ to $-V_m$. Because of this above the current in coil 20 begins to decrease, too. Assuming that the value of the current at the time of switching of the hysteresis comparator 22 to $-V_{off}$ is equal to $I_0 + \Delta I_P$, there exists the relation $K_v \cdot \Delta I_p = \Delta V_m$.

Although the value of the current becomes lower, it does not instantly change to $V_{on}$ and still increases, for the time being because of the hysteresis characteristic of the hysteresis comparator 22, and when the value V of the output voltage of the comparison amplifier 21 becomes larger than $\Delta V_p$, the output of the hysteresis comparator 22 changes to $V_{on}$ and therefore the voltage applied to the coil 20 turns to be $V_p$ again and the current begins to increase assuming that the value of the current at the time of the change in the output of the hysteresis comparator 22 is equal to $I_0 - \Delta I_m$, here exists the relation $K_v \cdot \Delta I_m = \Delta V_p$.

The hysteresis amplifier 13 repeats the behavior as above. Suppose that $t_1$ is the period of time when the current in the coil 20 increases from $I_0 - \Delta I_m$ to $I_0 + \Delta I_p$ and that $t_2$ is the one from $I_0 + \Delta I_p$ to $I_0 - \Delta I_m$ as shown is Fig. 6, the switching cycle T is $t_1 + t_2$ and the switching frequency f is $1/T$.

Next, the reason will be explained why the switching frequency of the hysteresis amplifier 13 is approximately proportionate to the gap X between the electromagnet 12 and the rotor 11.

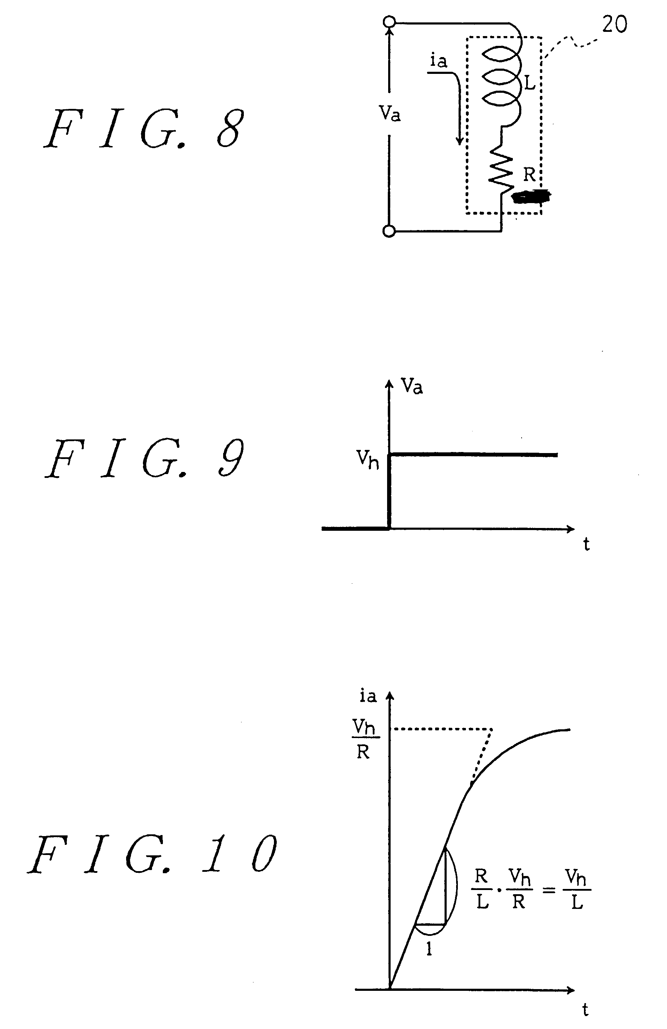

As shown in Fig. 8, the coil 20 of the electromagnet 12 can be supposed that the inductance L and resistor R is in series.

Suppose that the step-type voltage $V_a$ is applied to the ends of the coil 20 at the initial stage where the current in the coil is equal to 0 $[i_a(0)=0]$, then as shown in Fig. 9,

where

$$V_a = 0, \text{ if at the time } t < 0$$

$$V_a = V_h, \text{ if at the time } t \geqq 0$$

Then as shown in Fig. 10, the value of the current in the coil increases towards the final value $(V_h/R)$.

At the neighborhood of t=0, that is, when $i_a \ll (V_h/R)$, the rate of the increase in the current is equal to $(R/L) \cdot (V_h/R) = (V_h/L)$.

When the behavior of the hysteresis amplifier 13 satisfies the relation $(I_0 + \Delta I_p) \ll (V_h/R)$ as shown above, the time period $t_1$ when the current increases from $I_0 - \Delta I_m$ to $I_0 + \Delta I_p$ is $t_1 = L(\Delta Ip + \Delta I_m)/V_h$.

Likewise, the time period $t_2$ when the current decreases from $I_0 + \Delta I_p$ to $I_0 - \Delta I_m$ becomes $t_2 = L(\Delta I_p + \Delta I_m)/V_m$, when $V_m$ is chosen to satisfy the relation $(I_0 - \Delta I_p) + (V_m/R) \gg I_0 + \Delta I_p$.

Therefore, the switching cycle T $(=t_1 + t_2)$ is given as $T = L(\Delta I_p + \Delta I_m) \cdot (1/V_h + 1/V_m)$.

The inductance L of the coil 20 in the electromagnet 12 is approximately inverse proportionate to the gap X between the electromagnet 12 and the rotor 11. The detail is as follows.

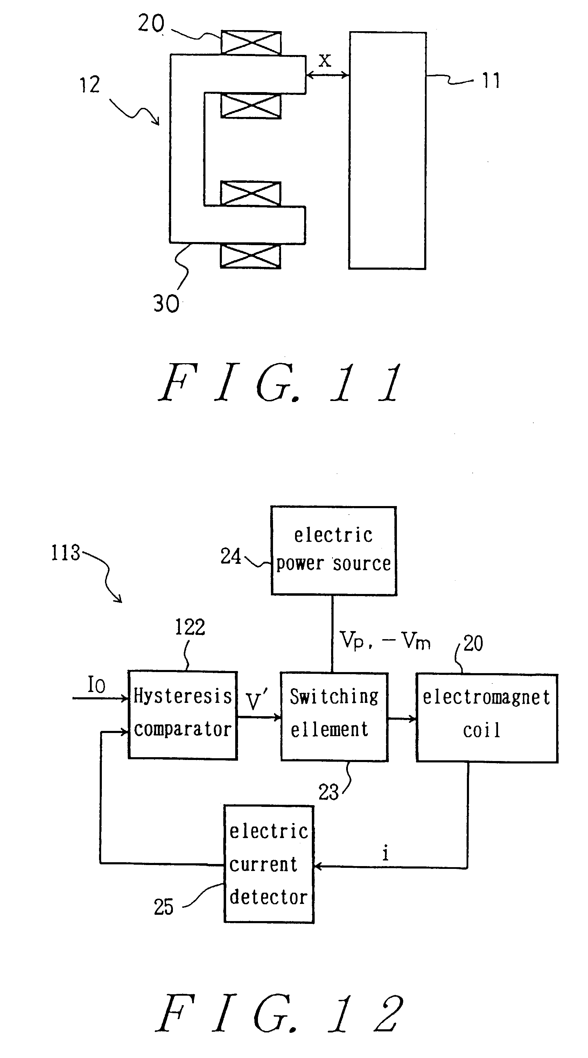

As shown in Fig. 11,

$$L \doteq N^2 A \mu_0 / 2_x = K_L / x,$$

where

N: total number of turns in the coil 20 of the electromagnet 12
A: the cross section area of the core 30

and suppose that the rotor 11 is made of ferromagnetic material (the amplitude permeability $\mu \doteq \infty$), then,

$$L \doteq N^2 A \mu_0 / 2_x = K_L / x$$

where

$\mu_0$:     the initial amplitude permeability
then $K_L = N^2 A \mu_0 / 2$

Therefore, $T = (K_L/x) \cdot (\Delta I_p + \Delta I_{pm}) \cdot (1/V_h + 1/V_m)$ where, the switching frequency $f(1/T)$ becomes equal to $f = K'x$, whereby

$K' = (V_h \times V_m)/\{K_L(\Delta I_p + \Delta I_m) \cdot (V_h + V_m)\}$ and therefore, the switching frequency $f$ is approximately proportionate to the gap x.

By the way, this invention is not limited to the range within the embodiment above, for example, although the control of the rotor's position is with the comparison of the phase of the switching of two hysteresis amplifiers in the embodiment above, the control of the rotor's position with the comparison of the phase of the switching of a hysteresis amplifier with the standard signal phase of a predetermined number of frequency can be also possible.

Fig. 12 shows a block diagram of the other constitution of the hysteresis amplifier. The comparison amplifier 21 shown in Fig. 4 is omitted in this hysteresis amplifier 113. Then, the command current $I_0$ which is supplied from the loop-filter 15 in Fig. 1 and the output of the electric current detector 25 are directly input into the hysteresis comparator 122.

And this hysteresis comparator 122 is constituted to perform the comparison amplifying function, that is, the hysteresis comparator 122 not only outputs the voltage V which is proportionate to the difference between the command current $I_0$ and the coil current i, but also is constituted in that the threshold value changes according to the history of the output. Nevertheless, it has such a characteristic as shown in the Fig. 5.

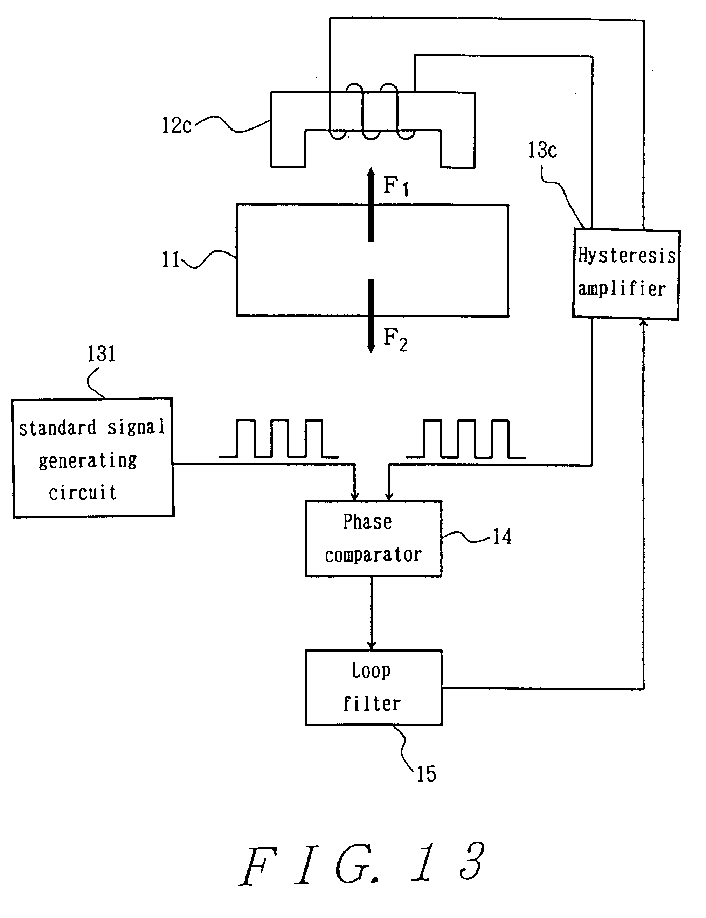

Fig. 13 shows the constitution of the second embodiment of the magnetic bearing in this invention. The same sign is attached to the same portion as in the first embodiment and the explanation thereof is abbreviated so long as it is the same as in the first embodiment.

In the second embodiment as shown in Fig. 13, the rotating axis of the rotor 11 is set as horizontal. The magnetic bearing has the electromagnet 12C which is set above the rotor 11, and the hysteresis amplifier 13c which supplies the exciting current to the electromagnet 12c. This amplifier has the standard signal generating circuit 131 which outputs the standard signal, the phase comparator 14 which receives both the switching wave of the standard signal above and of the hysteresis amplifier 13C and detects the phase difference between both of the waveforms above, and the loop-filter 15 which supplies the output from the phase comparator 14, which is converted to the direct current, to the hysteresis amplifier 13c.

In this magnetic bearing, the hysteresis amplifier 13C supplies the exciting current to the electromagnet 12c, and the rotor levitates itself due to the attraction F, of this electromagnet 12c. The stationary value of the attraction $F_1$ of this electromagnet 12c is determined to offset the effect of the gravity $F_2$ which affects the rotor which is set at the position.

In this second embodiment, either of the hysteresis amplifier in Fig. 4 or Fig. 12 can be used.

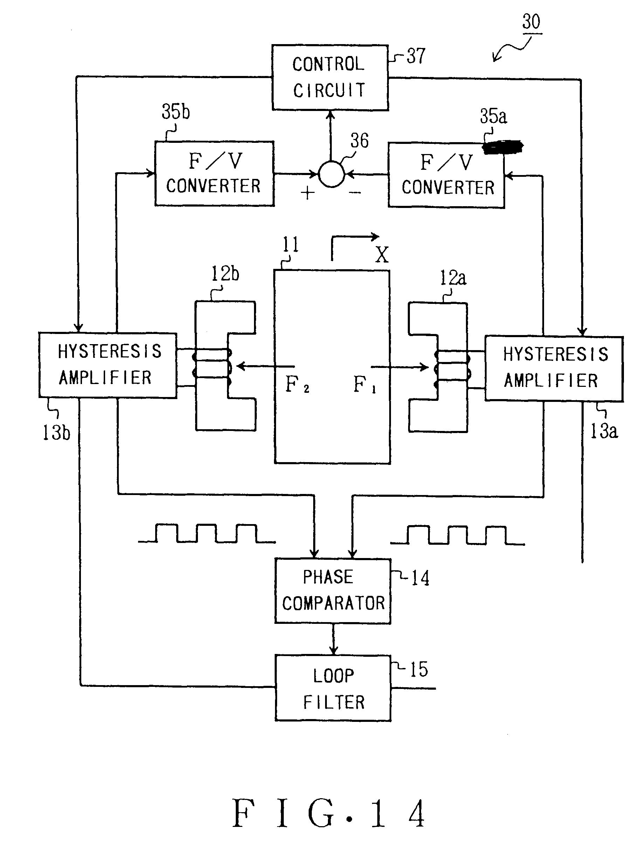

Fig. 14 shows the constitution of the third embodiment of the magnetic bearing in this invention at the same part of the third embodiment as in the first embodiment shown in Fig. 1 the same signs are made in Fig. 14 and the explanation on such part hereto is abbreviated.

In the third embodiment shown in Fig. 14, the circuit configuration with 2 electromagnets 12a, 12b, two hysteresis amplifiers 13a, 13b, the phase comparator 14, and the loop-filter 15 is absolutely the same as in those of the first embodiment in Fig. 1 and the operations in the former thereof is basically the same as in those of the latter.

In the third embodiment, the frequency-voltage servo system 30 is added to the circuit configuration of the first embodiment. This frequency-voltage servo system receives the switching signal of said hysteresis amplifiers 13a, 13b, and comprises with the frequency-voltage converters 35a, 35b (which is abbreviated as F/V converter hereinafter) which receives the voltage signal which is proportionate to the frequency of the switching signal above, the calculator 36 which deducts the output signals from the F/V converter 35a, 35b, and the control circuit 37 which supplies to each of the hysteresis amplifiers above 13a, 13b the servo signal which is created by itself based on the difference signal from the calculator 36.

The F/V converter 35a receives the switching signal of the hysteresis amplifier 13a, and can obtain the voltage signal which is proportionate to the frequency of the switching signal thereof. The F/V converter 35b receives the switching signal of the hysteresis amplifier 13b, and can obtain the voltage signal which is proportionate to the frequency of the switching signal thereof. Each of the voltage signals of these F/V converters 35a, 35b is deducted by the calculator 36. The difference of each voltage signal from the calculator 36 signifies the gap (position) between the rotor 11 and each electromagnet 12a, 12b. If this difference is zero, the gap above between the rotor 11 and each of the electromagnets12a, 12b signifies at the appropriate state and if it is positive or negative, the gap above signifies that the rotor 11 is decentering towards either of the electromagnets 12a or 12b. That is, from the difference signal from the calculator 36 is obtained the signal which is proportionate to the degree of decentering X of the rotor 11. The control circuit 37 controls through proportional integral derivation (PD) to the hysteresis amplifiers 13a, 13b, based on the difference signal from the calculator 36, and then the total system can be stabilized.

Even in the magnetic bearing of this third embodiment as mentioned above, the electromagnets 12a, 12b are applied through the switching of the two levels of voltage by the hysteresis amplifiers 13a, 13b, that is, the exciting current is supplied to the electromagnets 12a, 12b, and then, because of the magnetic force of the electromagnets 12a, 12b (attraction $F_1$, $F_2$) the rotor 11 becomes and holds floating. Here in this third embodiment, by way that the F/V servo system (F/V converters 35a, 35b, calculator 36, control circuit 37) is applied jointly, the prevention of the delay in the synchronous attraction at the initiating rotation and the error is synchronization, etc. are intended for the stabilization of the total system, compared with only application of PLL control in the first embodiment.

In the PLL control system which is utilized in the first embodiment and which is the case utilized in this third embodiment, the switching signals in the hysteresis amplifiers 13a, 13b are input into the phase comparator which, then, detects the phase difference and of which output is transformed to the direct current through the loop-filter 15 and is supplied to the hysteresis amplifiers 13a and 13b. Through this process above, the switching frequency of the hysteresis amplifier 13a and 13b is stabilized, that is, the rotor's position X is controlled to keep at the predetermined position.

And in this embodiment, in addition to the PLL control systems, the switching frequency from the hysteresis amplifiers 13a, 13b is converted to the voltage signal which is proportionate to the frequency of the each through the F/V converters 35a and 35b of the F/V servo system, the difference of the voltage signal is reckoned by the calculator 36, and PD control is made to the hysteresis amplifiers 13a and 13b by the control circuit 37, based on the difference above. Through this process above, the switching frequency of the hysteresis amplifiers 13a and 13b is stabilized, that is, the rotor's position X is controlled to keep at the predetermined position.

Like this above in this third embodiment, the hysteresis amplifier 13 (which represents 13a and 13b) is utilized, which has the characteristic that the switching frequency varies in accordance with the inductance and utilizing that switching frequency of the hysteresis amplifier 13 changes in accordance with the gap between the electromagnet 12 and the rotor 11, that is the rotor's position X, the rotor's position is obtained through the switching frequency of the hysteresis amplifier 13. And since such frequency signifies the rotor's position, the stabilization of the total system is attained through the simultaneous utilization of the F/V servo system together with the PLL control system, based on the frequency of this above. Moreover, the position sensor is not necessary even in this third embodiment.

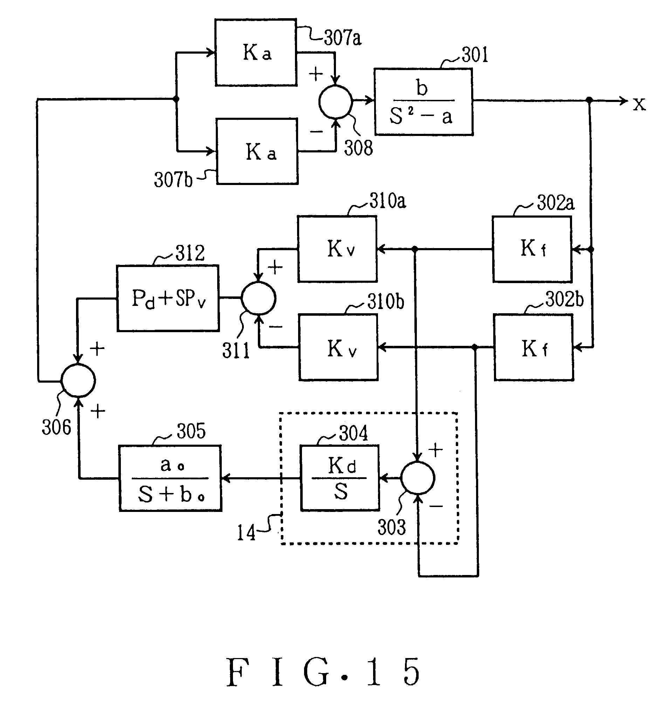

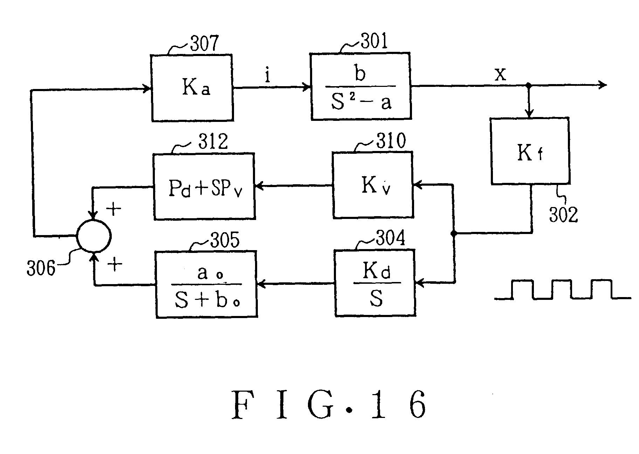

Fig. 15 shows a block diagram of the dynamic behavior of the third embodiment in this invention, and Fig. 16 shows a simplified block diagram of the dynamic characteristic of the third embodiment in this invention.

The dynamic characteristic block diagram of the Fig. 14 which is that of the third embodiment can be shown in Fig. 15.

In Fig. 15, the output (the displacement X of the rotor 11) from the block $[b/(S^2-a)]$ 301 is input into the phase comparator 14 via block $(Kf)$302a·302b. The phase comparator 14 comprises with subtractor 303 for the purpose of the phase comparison and the wave phase detector 304 $(Kd/S)$ which detects the wave phase out of the phase difference from subtractor 303.

The switching waveform from the block 302a, 302b above is compared by the subtractor 303 for the phase comparison, and the result is detected by the wave phase detector 304. The output from this wave phase detector 304 is input into the block $[a_0/(S+b_0)]$ 305 which represents the loop filter 15. The output of the block 305 is applied to the adder 306. The output of the adder 306 is input into the blocks $(Ka)$ 307a, 307b which represent respectively the hysteresis amplifiers 13a, 13b. The output of the blocks 307a, 307b is added by the adder 308 and the result is input into the block 301.

The output of the block 301 (the displacement of the rotor 11) is input into the block $(Kv)$ 310a, 310b which represents each of the F/V converter 35a, 35b via the block $(Kf)$ 302a, 302b. This block 310a, 310b outputs the voltage signal which is proportionate to the displacement X.

This voltage signal is subtracted in the block 311 which represents the adder 36, and the result, which is the difference, is input into the block $(Pd+SPv)$ 312 which represents the control circuit 37. The servo signal from this block 312 is applied to the block 306 in order to compensate the control signal in the PLL control system, that is, to stabilize the total system.

The control block shown in the Fig. 15 can be simplified as shown in Fig. 16. In Fig. 16, Ka, Kf, and Kv is shown in one figure in order for the calculation to be simplified. That is, in the constitution in Fig. 16, the block 302a·302b is represented by the block 302 and likewise the block 307a·307b by the block 307, and the block 310a, 310b by the block 310 and the block 303, 308, 311 is abbreviated in the Figure.

In the constitution of the Fig. 16. The transfer function T(S) for the closed loop of the system shown in Fig. 16 is as follows, in case that the signal which is F/V transformed switching signal is utilized and that the feedback coefficient can be set arbitrarily by, for example, PD control system applied and that the linear lowpass-filter is used as for the loop filter (block 304) 15,

$$T(S)=[b(S^2+b_0)]/[S^4+(a_2+b_0)S^3+(a_1+a_2b_0)S^2+a_1b_0S+a_0b]$$

where: $a_1=bPd-a$, $a_2=bPv$

Here, the characteristic polynomial for the closed loop system is determined as follows:

$$g(S)=S^4+g_3S^3+g_2S^2+g_1S+g_0$$

Now, each of coefficient and feedback coefficient, of the filter in defined as follows:

$g_3=a_2+b_0$, $g_2=a_1+a_2b_0$, $g_1=a_1b_0$, $g_0=a_0b$

As above, the third embodiment can be illustrated through the usage of F/V servo system together with PLL control system, by the dynamic characteristic block in Fig. 16, and by using the hysteresis amplifier 13a, 13b which is the self-exciting chopper circuit and by utilizing the relation that the switching frequency f is approximately proportionate to the gap X between the electromagnet 12a, 12b and the rotor 11, the rotor 11 is controlled to keep at the predetermined position X.

This is why, since the integral element of the phased locked loop control system (PLL control system) in the third embodiment is based on the ideal mathematical relation that the phase is equal to the integral of the angular frequency, the fact that the error does not occur in substance permits high precision control, and moreover why the system can be returned speedily and precisely to the synchronous state by the simultaneous utilization of the F/V the servo system together with PLL control system which has the demerit such as it is difficult that the synchronous state can be realized speedily at the initiating stage, etc. of the operations or as erroneous synchronization may occur in it.

By the way, even in this third embodiment either hysteresis amplifier in Fig. 4 or in Fig. 12 can be used.

And although the difference of voltage which is output from F/V converter 35a, 35b is grasped by the adder 36 in Fv servo system of the third embodiment above, based on the fact that the difference above is proportionate to the displacement X of the rotor 11, together with PLL control system, the system with only the F/V servo system, which is the fourth embodiment, can be realized without the usage of the PLL control system, so long as PD control is made by the hysteresis amplifier 13a, 13b based on the difference from the adder 36 above.

Even in the fourth embodiment too, the sensor is not necessary in order to obtain a stable levitation state of the rotor 11.

According to the invention in the claims 1 through 3 above, the following effect can be expected, that is, the position sensor is not necessary since the rotor's position can be detected from the switching frequency of the hysteresis amplifier and the rotor's position can be controlled precisely with a simple constitution since the deviation of the rotor's position can be detected through the phase-locked-loop at the phase stage level.

And according to the invention in the claim 4, the following effect can be expected, that is, in addition to the fact of no need of the position sensor, due to the detectability of the rotor's position from the switching frequency of the hysteresis amplifier, the precise control of the rotor's position can be expected and the delay in the phase synchronization in phase-locked-loop and the erroneous synchronization can be prevented with simple constitution, since the deviation in control can be detected in the phase stage level due to the phase-locked-loop and due to the combined utilization of the frequency-voltage servo system together with a phase-locked-loop.

## Claims

1.  A magnetic bearing comprising:

    an electromagnet (12) for levitating a rotor (1) due to a magnetic force;

    an amplifier (13) for supplying exciting current to the electromagnet (12);

    position controlling means for controlling the position of the rotor (1);

    **characterized in**

    that the amplifier (13) is a hysteresis amplifier,

    that the current (i) through the coil (20) of the electromagnet (12) is used as an input for the hysteresis amplifier (13) such that the frequency of the hysteresis amplifier is a measure for the gap (X) between the electromagnet

(12) and the rotor (11), and

that said position controlling means are controlling means (14, 15; 35, 36, 37) for controlling the switching frequency of the hysteresis amplifier (13) to be constant.

2. A magnetic bearing according to claim 1, wherein said controlling means has a phase-locked-loop (14, 15) for controlling the switching frequency to be constant due to control of the exciting current supplied from the hysteresis amplifier (13) in accordance with the switching phase in the hysteresis amplifier.

3. A magnetic bearing according to claim 1,
   **characterized in**

   that said hysteresis amplifier (13) supplies exciting current to the electromagnet (12) by way of switching one of two levels of voltage; and

   that said position controlling means for controlling the rotor's position uses a phase-locked-loop for controlling a switching frequency of the hysteresis amplifier (13) through controlling the exciting current supplied from the hysteresis amplifier in accordance with the switching phase at the hysteresis amplifier.

4. A magnetic bearing according to claim 1,
   **characterized in**

   that said hysteresis amplifier (13) supplies exciting current to the electromagnet (12) by way of switching one of two levels of voltage; and
   that said position controlling means controls the rotor's position by using a phase-locked-loop (14, 15) for controlling a switching frequency of the hysteresis amplifier (13) through controlling the exciting current supplied from the hysteresis amplifier in accordance with the switching phase at the hysteresis amplifier, simultaneously using a frequency-voltage servo system (35, 36, 37) for controlling the switching frequency of the hysteresis amplifier by way of the exciting current supplied from the hysteresis amplifier based on the voltage in accordance with the switching frequency at the hysteresis amplifier.


## Patentansprüche

1. Ein Magnetlager, enthaltend:

   einen Elektromagneten (12) zum schwebenden Haltern eines Rotors (1) mit Hilfe einer magnetischen Kraft;

   einen Verstärker (13) zum Versorgen des Elektromagneten (12) mit Erregerstrom;

   Positions-Steuermittel zum Steuern der Position des Rotors (1);

   dadurch gekennzeichnet, daß

   der Verstärker (13) ein Hystereseverstärker ist;

   der Strom (i) durch die Spule (20) des Elektromagneten (12) als Eingang für den Hystereseverstärker (13) benutzt wird, so daß die Frequenz des Hystereseverstärkers ein Maß für den Spalt (X) zwischen dem Elektromagneten (12) und dem Rotor (11) ist, und

   die Positions-Steuermittel Steuermittel (14, 15; 35, 36, 37) sind zum Steuern der Schaltfrequenz des Hystereseverstärkers (13) so, daß sie konstant bleibt.

2. Ein Magnetlager gemäß Anspruch 1, in dem das Steuermittel eine phasensynchronisierte Schleife (14, 15) zum Steuern der Schaltfrequenz auf Konstanz aufgrund der Steuerung des vom Hystereseverstärker (13) gemäß der Schaltphase im Hystereseverstärker gelieferten Erregerstroms ist.

3. Ein Magnetlager gemäß Anspruch 1,

dadurch gekennzeichnet, daß

der Hystereseverstärker (13) Erregerstrom an den Elektromagneten (12) durch Schalten einer von zwei Spannungshöhen schickt; und

das Positionssteuermittel zum Steuern der Position des Rotors eine phasensynchronisierte Schleife zum Steuern einer Schaltfrequenz des Hystereseverstärkers (13) durch Steuern des vom Hystereseverstärker gemäß der Schaltphase am Hystereseverstärker gelieferten Erregerstroms benutzt.

4. Ein Magnetlager gemäß Anspruch 1,
dadurch gekennzeichnet, daß

der Hystereseverstärker (13) Erregerstrom an den Elektromagneten (12) durch Schalten einer von zwei Spannungshöhen schickt; und

das Positionssteuermittel die Position des Rotors steuert durch Benutzen einer phasensynchronisierten Schleife (14, 15) zum Steuern einer Schaltfrequenz des Hystereseverstärkers (13) durch Steuern des vom Hystereseverstärker gemäß der Schaltphase am Hystereseverstärker gelieferten Erregerstroms unter gleichzeitiger Benutzung eines Frequenz-Spannungs-Servosystems (35, 36, 37) zum Steuern der Schaltfrequenz des Hystereseverstärkers durch den vom Hystereseverstärker auf der Grundlage der Spannung gemäß der Schaltfrequenz am Hystereseverstärker gelieferten Erregerstroms.

**Revendications**

1. Palier magnétique comprenant :

un électro-aimant (12) destiné à la lévitation d'un rotor (1) grâce à une force magnétique,
un amplificateur (13) destiné à appliquer un courant d'excitation à l'électro-aimant (12),
des moyens de commande de position destinés à commander la position du rotor (1),

caractérisé en ce que

l'amplificateur (13) est un amplificateur à hystérésis,
le courant (i) circulant dans la bobine (20) de l'électro-aimant (12) est utilisé en tant qu'entrée pour l'amplificateur à hystérésis (13) de telle manière que la fréquence de l'amplificateur à hystérésis constitue une mesure de l'entrefer (X) entre l'électro-aimant (12) et le rotor (11), et
lesdits moyens de commande de position sont des moyens de commande (14, 15 ; 35, 36, 37) destinés à commander la fréquence de commutation de l'amplificateur à hystérésis (13) pour qu'elle soit constante.

2. Palier magnétique selon la revendication 1, dans lequel lesdits moyens de commande comportent une boucle à verrouillage de phase (14, 15) destinée à commander la fréquence de commutation pour qu'elle soit constante grâce à la commande du courant d'excitation appliqué depuis l'amplificateur à hystérésis (13) conformément à la phase de commutation dans l'amplificateur à hystérésis.

3. Palier magnétique selon la revendication 1,
caractérisé en ce que

ledit amplificateur à hystérésis (13) applique un courant d'excitation à l'électro-aimant (12) au moyen de la commutation de l'un de deux niveaux de tension, et
lesdits moyens de commande de position destinés à commander la position du rotor utilisent une boucle à verrouillage de phase en vue de commander une fréquence de commutation de l'amplificateur à hystérésis (13) grâce à la commande du courant d'excitation appliqué depuis l'amplificateur à hystérésis conformément à la phase de commutation au niveau de l'amplificateur à hystérésis.

4. Palier magnétique selon la revendication 1,
caractérisé en ce que

ledit amplificateur à hystérésis (13) applique un courant d'excitation à l'électro-aimant (12) grâce à la commutation de l'un de deux niveaux de tension, et

lesdits moyens de commande de position commandent la position du rotor en utilisant une boucle à verrouillage de phase (14, 15) en vue de commander une fréquence de commutation de l'amplificateur à hystérésis (13) grâce à la commande du courant d'excitation appliqué depuis l'amplificateur à hystérésis conformément à la phase de commutation au niveau de l'amplificateur à hystérésis, en utilisant simultanément un système d'asservissement fréquence-tension (35, 36, 37) destiné à commander la fréquence de commutation de l'amplificateur à hystérésis au moyen du courant d'excitation appliqué depuis l'amplificateur à hystérésis sur la base de la tension selon la fréquence de commutation au niveau de l'amplificateur à hystérésis.

*F I G. 1*

F I G. 2

V

I

12

x

11

F I G. 3

I

$I_0 + \Delta IP$
$I_0$
$I_0 - \Delta I_m$

t

V

$V_p$

$-V_m$

t

13

21
I$_0$ → comparison amplifier → V → Hysteresis comparator → V' → Switching element → electromagnet coil

22

24 electric power source

V$_p$, − V$_m$

20

23

25 electric current detector ← i

$F\ I\ G.\ 4$

V'

V$_{on}$

− Δ V$_m$

Δ V$_p$

V

− V$_{off}$

$F\ I\ G.\ 5$

14

$I_0 + \Delta I_P$

$I_0$

$I_0 - \Delta I_m$

$I'_0$

$t_1$

$t_2$

$t$

# F I G. 6

20

L

$V_P$

R

I'

# F I G. 7

EP 0 632 209 B1

FIG. 8

FIG. 9

FIG. 10

$$\frac{R}{L} \cdot \frac{V_h}{R} = \frac{V_h}{L}$$

# FIG. 11

# FIG. 12

12c

13c

F$_1$

11

F$_2$

Hysteresis
amplifier

131

standard signal
generating
circuit

Phase
comparator

14

Loop
filter

15

# F I G. 1 3

F I G · 1 4

$$F \ I \ G \cdot 1 \ 5$$

F I G · 1 6

F I G · 1 7
PRIOR ART

EP 0 632 209 B1